(19)

Europäisches
Patentamt
European
Patent Office
Office européen
des brevets

(11) **EP 2 863 646 B1**

(12) **EUROPEAN PATENT SPECIFICATION**

(45) Date of publication and mention
of the grant of the patent:
**23.12.2015 Bulletin 2015/52**

(51) Int Cl.:
***H04Q 11/00*** *(2006.01)*

(21) Application number: **13306413.9**

(22) Date of filing: **15.10.2013**

(54) **Method of switching an optical signal in an optical flex grid network**

Verfahren zur Schaltung eines optischen Signals in einem optischen Netzwerk mit flexiblem Netz

Procédé de commutation d'un signal optique dans un réseau de grille souple optique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.04.2015 Bulletin 2015/17**

(73) Proprietor: **ALCATEL LUCENT
92100 Boulogne-Billancourt (FR)**

(72) Inventor: **Buchali, Fred
70435 Stuttart (DE)**

(74) Representative: **Kröhnert, Michael et al
Alcatel-Lucent Deutschland AG
Intellectual Property Business Group
Lorenzstrasse 10
70435 Stuttgart (DE)**

(56) References cited:
**WO-A1-2011/113679     US-A1- 2012 328 291
US-B1- 7 231 107**

- **Jonas Mårtensson: "Flexible spectrum allocation -transceivers and node architecture", ICT, 14 March 2012 (2012-03-14), pages 1-22, XP055104665, Retrieved from the Internet: URL: http://www.ict.kth.se/MAP/FMI/Negonet/ tgn-ons/ documents/2012_03_14 Meeting/ONS_ FlexibleSpectrum_120314_Jonas. pdf [retrieved on 2014-02-27]**
- **Finisar Corporation: "WHITE PAPER Programmable narrow-band filtering using the WaveShaper 1000E and WaveShaper 4000E", , 18 January 2009 (2009-01-18), pages 1-6, XP055104629, Retrieved from the Internet: URL: http://www.finisar.com/sites/default/f iles/pdf/PX7rfv-White-Paper-WaveShaper-Bas ics.pdf [retrieved on 2014-02-27]**

## Description

## Field of the invention

The invention relates to a method of switching one or more optical signals in an optical flex grid network. More particularly, the invention relates to a method, a network controller, a network node and a network for switching an optical signal in an optical flex grid network.

## Background

For optical networks having the form of meshed networks it is a well known approach to allocate optical signals along one or more optical links to spectral slots of a fixed optical grid. In such a fixed optical grid, each optical signal may be transmitted within a spectral slot of a fixed, predetermined bandwidth, wherein all spectral slots have the same bandwidth. The transmission bandwidth of an optical signal assigned to a specific spectral slot depends on the signal impairments that this optical signal experiences during the transmission via one or more optical links along the optical connection, usually called optical light-path, from the transmitting node to the receiving node.

For switching within network nodes an optical signal allocated to a specific spectral slot from an incoming link to an outgoing link, it is a common technology to use wavelength selective switches (WSS) having a switching granularity that corresponds to the bandwidth of the spectral slots of the fixed optical grid. In detail, such fixed grid WSS devices apply to an optical signal of a respective fixed spectral slot an individual filter function corresponding to the fixed bandwidth of a spectral slot of the fixed optical grid. Even if two optical signals allocated to two adjacent spectral slots shall be switched by a same fixed grid WSS device to a same outgoing link, the fixed grid WSS device can only be instructed to apply individual filter functions of such spectral slot width to the respective optical signals.

One type of impairment that an optical signal may experience during a transmission throughout the meshed network results from the fact, that such a filter function applied by the fixed grid WSS device may deteriorate the optical signal especially at the sidebands of the optical signal, since the amplitude of the filter function that is applied to the optical signal is not of a constant amplitude level for all wavelengths within the respective spectral slot. Thus, the higher the number of WSS devices applying filter functions for switching the optical signal along the light path, the higher is the signal impairment experienced by an optical signal. Although an optical signal may carry data that is encoded using forward error correction (FEC), such FEC is not able to counteract against any amount of signal impairment experienced by the transmitted and filtered optical signal.

Thus, filter functions applied by fixed grid WSS devices limit the number of network nodes that may be passed by an optical signal within an optical fixed grid network.

Document D1: US 2010/0328291 A1 describes systems and methods of enhancing channel bandwidth in an optical system having a number of wavelength selective switching devices. In order to avoid the narrowing of the channel bandwidth upon transmission through a WSS or a cascade of WSS's, a modification function selectively modifies a channel band shape such that the channel's bandwidth is substantially enhanced at a receiver, independent of the number of WSS devices that are passed.

## Summary

Proposed is a method of switching an optical signal in an optical flex grid network. Optical signal are allocated to spectral slots of an optical flex grid with regard to respective optical links.

Optical nodes of the network perform switching of optical signals from incoming links connected to their input ports to outgoing links connected to their output ports using one or more flex grid WSS devices. The WSS devices are flex grid WSS devices, which are operable to provide filter functions for switching, wherein the filter functions are of slice granularity. Spectral slots of the optical flex grid consists of an integer number of spectral slices. An optical flex grid is an optical grid, in which the different spectral slots may have different respective wavelength bandwidths, and in which all spectral slots are of slice granularity, wherein all slices have a same wavelength bandwidth. In other words, each spectral slot consists of respective integer number of spectral slices.

The method contains the set of asserting or determining an allocation of an optical signal to a first spectral slot of the optical flex grid at an input port of an optical node. Furthermore, the method comprises the step of asserting or determining for this optical signal an output port of the optical node, to which the optical signal shall be switched.

A possible allocation status of a second, next-neighbouring spectral slot, which is next neighboured to the first spectral slot, is determined for the input port of the optical node.

Finally, controlling instructions are generated, which indicate a switching request. The switching request is a request for switching at least the first signal from the input port to the output port at the node using a flex grid WSS device via a continuous filter function, wherein this continuous filter function comprises at least the spectral slices of first spectral slot. Furthermore, the continuous filter function comprises one or more spectral slices of the second spectral slot in dependence on at least the determined allocation status.

According to a first embodiment, the method comprises a further step, in which it is determined whether the second optical signal shall be switched from the input port to the output port at the optical node. In the case, that it is determined that a second optical signal is allocated to the second spectral slot at the input port and that also the second optical signal shall be switched from the input port to the output port at the optical node, then the control instructions are generated such that the switching request indicates switching the first signal and the second signal from the input port to the output port by the flex grid WSS devices via a continuous filter function, which comprises the spectral slices of first spectral slot and the spectral slices of second spectral slot.

According to a second embodiment, the method comprises a further step in which, in case that it is determined that no second optical signal is allocated to the second spectral slot at the input port, the control instructions are generated such that the switching request indicates switching the first signal from the input port to the output port by the flex grid WSS via a continuous filter function, which comprises the spectral slices of the first spectral slot and one or more spectral slices of the second spectral slot.

Furthermore proposed is a network controller, which is operable to carry out the steps of the method according to the first and/or the second embodiment.

Furthermore, proposed is an optical network node, which is operable to carry out the steps of the method according to the first and/or the second embodiment.

Furthermore proposed is an optical flex grid network, comprising the proposed network controller.

Furthermore proposed is an optical flex grid network, comprising the proposed network node.

**Brief description of the Figures**

Figure 1 shows an optical meshed network.

Figure 2 shows a proposed optical network node.

Figure 3a shows an optical grid.

Figure 3b shows filter functions applied to optical signals allocated to spectral slots of the fixed optical grid.

Figures 3c to 3e show different filter functions applied to on an optical signal.

Figure 3f shows a continuous filter function of a flex grid WSS device according to the first embodiment.

Figure 4 shows a proposed network controller.

Figure 5a shows spectral slots of the optical grid.

Figure 5b shows a filter function applied to a spectral slot of the optical grid.

Figure 5c shows a continuous filter function of a flex grid WSS device according to the second embodiment.

Figure 6 shows different filter functions comprising different numbers of spectral slices.

Figure 7a shows an allocation of spectral slots for different optical paths.

Figure 7b shows the optical paths in an exemplary optical network.

Figure 8 shows frequency offsets by which a center frequency of a usable transmission bandwidth may be shifted.

Figure 9 shows resulting usable transmission bandwidths.

Figure 10 shows bit error ratios achieved when not applying the method according to the first embodiment and when applying the method according to the first embodiment.

Figure 11 shows bit error ratios achieved when not applying the method according to the first and the second embodiment and when applying the method according to the first and the second embodiment.

Figure 12 shows resulting bandwidth values as a function of a number of WSS devices performing filtering at a wavelength edge of a spectral slot.

Figure 13a shows steps of deriving a shift of a center frequency.

Figure 13b shows a butterfly filter with four finite impulse response filters.

**Description of embodiments**

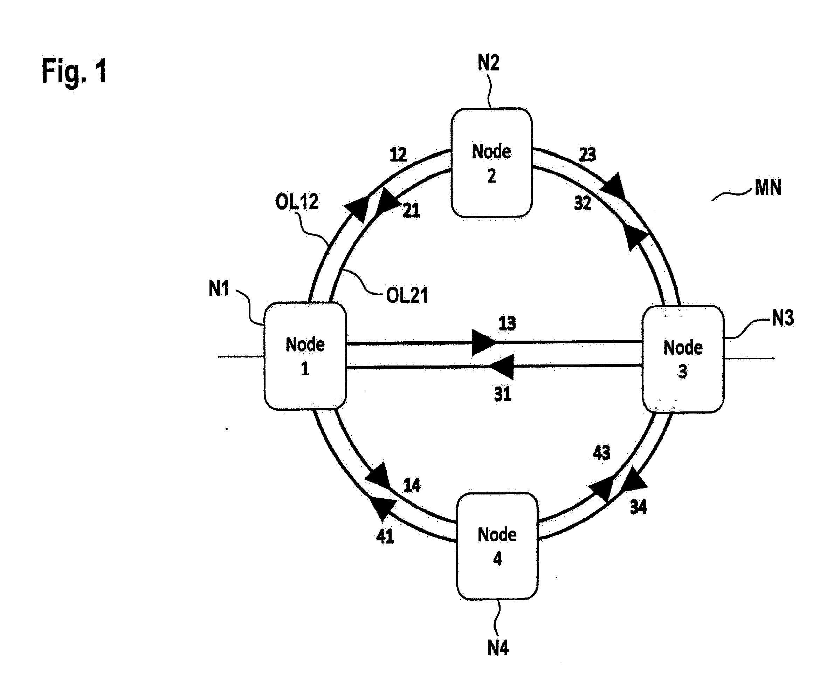

Figure 1 shows a mesh network MN, in which different optical network nodes N1, N2, N3, N4 are connected by different optical links, such as for example the optical link OL12 or the optical link OL21. At the optical links, transmission directions are indicated within Figure 1 via different arrows pointing in the respective transmission directions.

Preferably, the nodes N1 and N3 are add-drop multiplexing nodes, while the nodes N2 and N4 are cross connecting nodes. The network node proposed herein further below may be an add-drop multiplexing node or a cross connecting node.

An optical connection from one of the nodes, for example the node N1, to another one of the nodes, for example node N3, may be established in by a so called light path leading within a specific spectral slot from the node N1 to the node N2 via the optical link with the index 12 and then from the node N2 to the node N3 via the optical link with the index 23. It shall be assumed, that an optical signal transmitted at the node N1 in the direction towards the node N3 along the links with the index 13 and the index 23 shall not be converted in its wavelength at the node N2, but it shall be switched at the node N2 from the incoming link with the index 12 to the outgoing link with the index 23 towards the node N3.

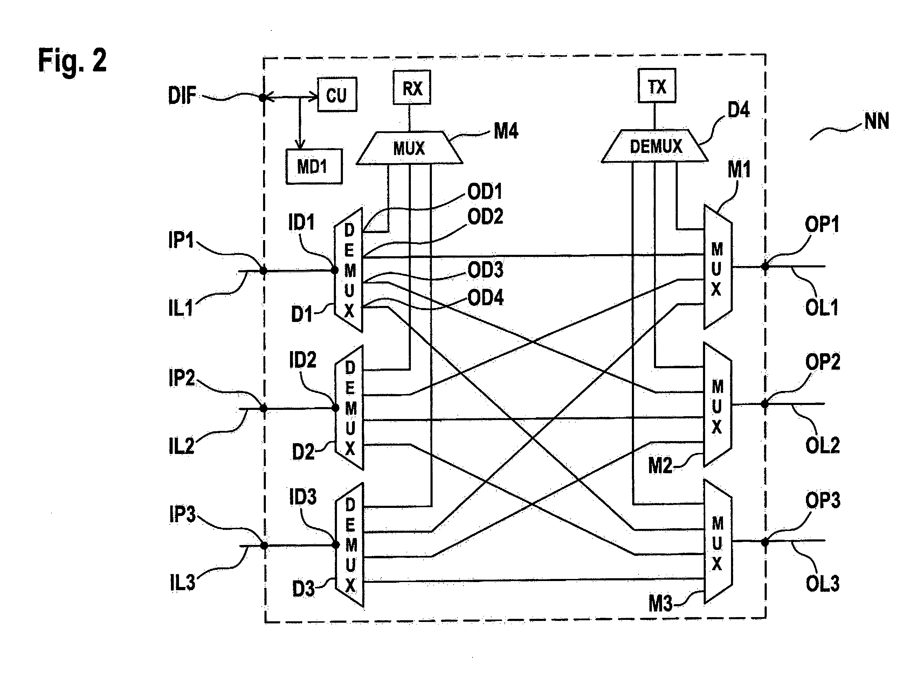

Figure 2 shows a proposed network node NN. The network node NN is in this case an add-drop multiplexing node, containing a receiver RX and a transmitter TX. In the case, that the node NN is an optical cross connecting node, the node NN does not contain a receiver RX or a transmitter TX.

The node NN is connected via its input ports IP1, IP2, IP3 to respective incoming links IL1, IL2, IL3. The input ports IP1, IP2, IP3 are connected to respective input ports ID1, ID2, ID3 of respective demultiplexing devices D1, D2, D3. The demultiplexing devices D1, D2, D3 of the proposed network node NN are flex grid WSS devices.

The following explanations are given for an example in which an optical signal is to be switched from an incoming link IL1 to an outgoing link OL2. For switching the optical signals from an input port IP1, connected to the incoming link IL1, to an output port OP2, connected to the outgoing link OL2, the demultiplexing device D1 applies one or more filter functions to the optical signals allocated to respective spectral slots with respect to the incoming link IL1. In detail, the flex grid WSS device D1 applies a filter function to the optical signal between its input port ID1 and its output port OD3 having a passband for that spectral slot to which the optical signal is allocated with respect to the link IL1. The filter function allows a transmission of the optical signal from the port ID1 to the port OD3, which is indirectly connected via the multiplexing device M2 to the output port OP2. To this port OP2, the outgoing link OL2 is connected. In other words, the node NN performs switching of optical signals from input port IP1, connected to the incoming link IL1, to the output port OP2, connected to the outgoing link OL2, using the flex grid WSS device D1, which provides a filter function.

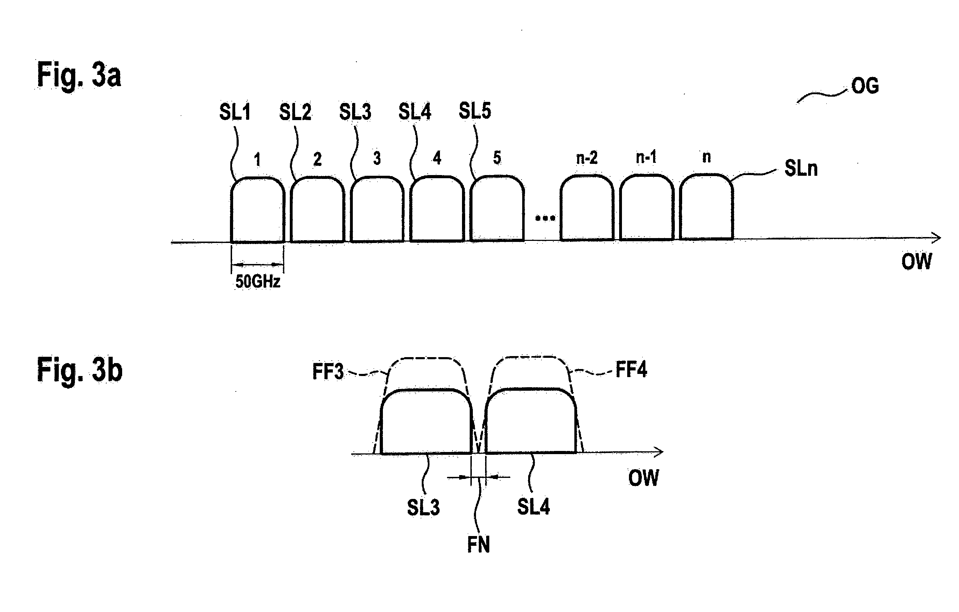

Figure 3a shows a flexible optical grid OG, alternatively called optical flex grid, which contains adjacent spectral slots SL1, ..., SLn for an optical wavelength OW. A spectral slot may for example have a bandwidth of 50 GHz. As shown in Figure 3a, all spectral slots SL1, ..., SLn have the same bandwidth, which is only an example. The different spectral slots may have different bandwidths since the optical grid OG is a flex optical grid. The spectral slots of the optical flex grid consist of respective integer numbers of spectral slices. In the optical flex grid OG the different spectral slots are of slice granularity, wherein all slices have a same wavelength bandwidth.

Coming to Figure 3b, it shall now be assumed that a switching of an optical signal allocated to the spectral slot SL3 from the input port IP1 to an output port OP2 of the node NN shown in Figure 2 shall be performed. In this example, also an optical signal allocated to the slot SL4 is present at the input port IP1. It shall be assumed, that also the signal allocated to the slot SL4 shall be switched from the port IP1 to the port OP2.

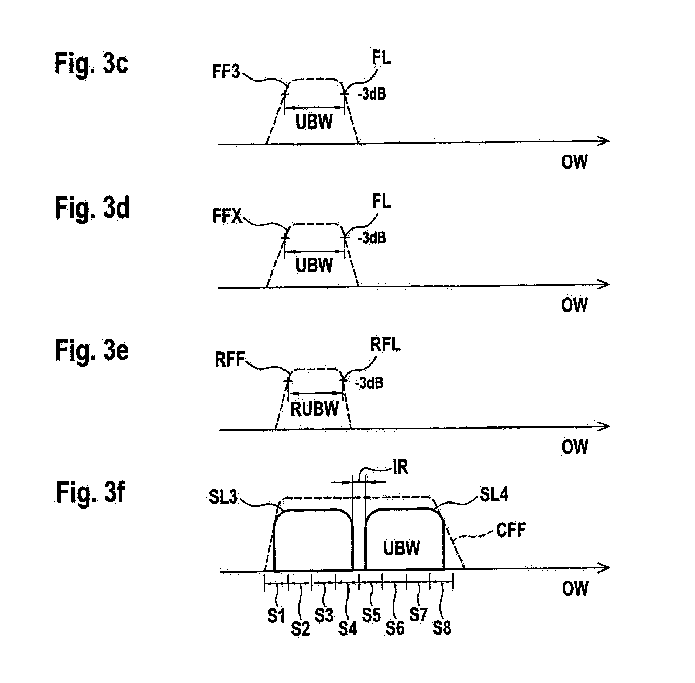

Figure 3b shows the slots SL3 and SL4 over the optical wavelengths OL in an enlarged scale. Furthermore, Figure 3b shows filter functions FF3 and FF4, which could be applied, in the case that a fix grid WSS device would perform the filtering of the optical signals. Such filter functions FF3 and FF4 used by a fixed grid WSS device would be individual filter functions applied to the individual spectral slots SL3 and SL4 shown in Figure 3a, such that a filter notch FN would be present between the filter functions FF3 and FF4. This filter notch may result in signal impairment, which will now be explained in more detail with regards to the Figures 3c, 3d and 3e.

Figure 3c shows again the filter functions FF3 of the wavelength WL, wherein the filter function FF3 has a filter level FL of for example -3 dB, which defines the usable bandwidth UBW, within which a resulting filtered signal may be transmitted and may pass the filter function FF3. In the case that an optical signal would not only pass through the filter function FF3 at one optical node, but also through another filter function FFX, which similar or equal to the filter function FF3 and shown in Figure 3d, of another WSS at another optical node, then the resulting filter function RFF shown in Figure 3e would have a resulting usable bandwidth RUBW. The bandwidth RUBW, within which the optical signal may pass the filters of WSS devices along the light path, is reduced with regard to the usable bandwidth UBW of the filter function FF3 and thus also to a bandwidth initially transmittable at a transmitting side at the beginning of the light path. Thus, the higher the number of optical nodes is, which perform optical filtering with WSS devices for switching an optical signal via filter functions, the stronger the signal impairment is.

According to a first embodiment, it is proposed to assert or determine an allocation of an optical signal to the spectral slot SL3 of the optical grid OG, shown in Figure 3a, at the input port IP1 of the node NN shown in Figure 2. Furthermore, it is asserted or determined for the optical signal allocated to this spectral slot SL3, to which output port, here the port OP2 of the node NN shown in Figure 2, the optical signal shall be switched within the node NN.

Furthermore, it is determined whether another optical signal is allocated to a second, next-neighbouring spectral slot, such as the slot SL4, at the input port IP1. Even furthermore, it is also determined whether the optical signal of the slot SL4 shall be switched from this input port IP1 to this output port OP2 of the node NN shown in Figure 2.

In the case that another optical signal is allocated to the second, next-neighbouring spectral slot SL4 at the input port IP1 and that this second optical output signal of the slot SF4 shall be switched from the port IP1 to the port OP2 of the node NN, then control instructions are generated, which request the WSS D1 to apply a continuous filter function CFF, shown in Figure 3f, which comprises the spectral slices S1, ..., S4 of the first spectral slot SL3 and the spectral slices SL5, SL8 of the second spectral slot SL4. In this example, each slot SL3, SL4 consists of four slices S1, ..., S4 or S5, ..., S8, wherein for example a slice is of the bandwidth of 12.5 GHz.

The advantage of the proposed method is, that due to the fact, that the optical signals allocated to the slots SL3 and SL4 are to be switched from the same input port IP1 to same output port OP2 of the node NN shown in Figure 2, the flex grid WSS demultiplexing device D1 of Figure 2 is instructed according to the proposed method to apply a continuous filter function CFF. This filter function CFF is a continuous filter function containing the slices S1, ..., S4 of the slot SL3 and the slices S5, ..., S8 of the neighboured slot SL4. The resulting combined filter function CFF has an inner region IR between these slots SL3 and SL4 and thus no filter notch that may deteriorate the signals allocated to the slots SL3 or SL4 in this inner region. This is in contrast to the filter notch FN shown in Figure 3d. Thus, by the method proposed herein filtering, as for example by the filtering function CFF shown in Figure 3d, is achieved, in which signal impairment experienced by the signals allocated to the slots SL3 and SL4 is reduced; this in turn may increase the number of network nodes that an optical signal may pass along a light path. The continuous filter function for switching the optical signals allocated to the spectral slots SL3 and SL4 thus forms a joint filter function or a joined channel causing less signal impairment than the solution known from the prior art.

The proposed different steps of the proposed method according to the first embodiment may be carried out by different devices in two different ways proposed herein.

According to the first way proposed herein for carrying out the different proposed steps according to the first embodiment, the network node NN of Figure 2 contains a control unit CU, which is preferably internally connected to the input ports IP1, ..., IP3 of the node NN or the input ports ID2, ..., ID3 of the WSS devices D1, ..., D3. The control unit CU is furthermore connected to a data interface DIF, via which the control unit CU receives switching requests from a network controller of the network. The switching request received at the control unit CU of the node NN of Figure 2 may contain preferably a virtual path ID of the light path formed between the port IP1 and the port OP2 together with the lowest spectral slice S1 and the highest spectral slice S8 forming the filter function CFF illustrated in Figure 3d. Preferably, the network node NN contains a memory device MD1 which is connected to the control unit CU and the data interface DIF via an internal data bus IDB1. More preferably, the control unit CU carries out the different steps of the method according to the first embodiment in conjunction with the memory device MD1.

According to this first way of the first embodiment, the switching requests received by the control unit CU indicate, which optical signals of which spectral slots shall be switched from an input port, such as the port IP1, to an output port, such as the port OP2, by the node NN via the flex grid WSS devices such as the device D1. The control unit CU asserts the allocation of the first optical signal to the slot SL3 at the port IP1, by detecting a presence of an optical signal within the spectral slot SL3. Furthermore, the control unit CU asserts for this optical signal the output port OP2, to which the optical signal shall be switched, by analysing the control instructions received by the control unit CU.

The control unit CU furthermore determines whether a second optical signal is allocated to the next neighbouring spectral slot SL4 at the input port IP1. Even furthermore, the control unit CU determines whether this second optical signal of the slot SL4 shall be switched from the input port IP1 to the output port OP2 of the node NN, by analysing the switching instructions received at the node NN via the data interface DIF.

If a second optical signal is allocated to the next neighbouring spectral slot SL4 at the input port IP1 and if also this second optical signal of the slot SL4 shall also be switched from the same input port IP1 to the same output port OP2, then the control unit CU generates control instructions, which contain a switching request directed to the WSS device D1. The switching request indicates that the first and the second signal shall be switched from the input port to the IP1 to the output port OP2. This request is in detail a request directed to the WSS device D1 to apply a continuous filter function CFF that comprises the spectral slices S1, ..., S4 of the spectral slot SL3 and the spectral slices SL5, ..., SL8 of the spectral slot SL4 to optical signals between the input port ID1 and the output port ID3..

To summarize the above, the network node NN is operable to

- assert an allocation of a first optical signal to a first spectral slot SL3 at an input port IP1,
- assert for the first optical signal an output port OP2 to which the optical signal shall be switched,
- determine possible allocation status of a second, next neighbouring spectral slot SL4 at the input port IP1,
- and to generate control instruction indicating a switching request for switching at least the first signal from the input port IP1 to the output port OP2 by a flex grid WSS D1 via a continuous filter function comprising at least the spectral slices of the first spectral slot SL3, wherein the continuous filter function comprises one or more spectral slices of the second spectral slot SL4 in dependence on at least the determined allocation status.

In further detail, the node NN is operable

- to determine whether the second optical signal shall be switched from the input port to the output port OP2,

- and, in case that it is determined that a second optical signal is allocated to the second, next-neighbouring spectral slot SL4 at the input port IP1 and that also this second optical signal shall be switched from the input port to the output port OP2, to generate the control instructions such that the switching request indicates switching the first signal and the second signal from the input port IP1 to the output port OP2 by the WSS via the continuous filter function comprising the spectral slices of the first spectral slot SL3 and the spectral slices of the second spectral slot SL4.

Thus, the node NN generates the control instructions in dependence on the determined allocation status and in dependence on a determined output port of the second optical signal.

The control unit CU may furthermore generate filtering information indicating the bandwidth of the filter function CFF. This filtering information is then sent by the network node NN via the data interface DIF to a network controller of the network. The network controller may then derive from this filtering information a number of network nodes, that my use WSS devices along the light path that the signals allocated to the slots SL3 and SL4 pass on their light paths.

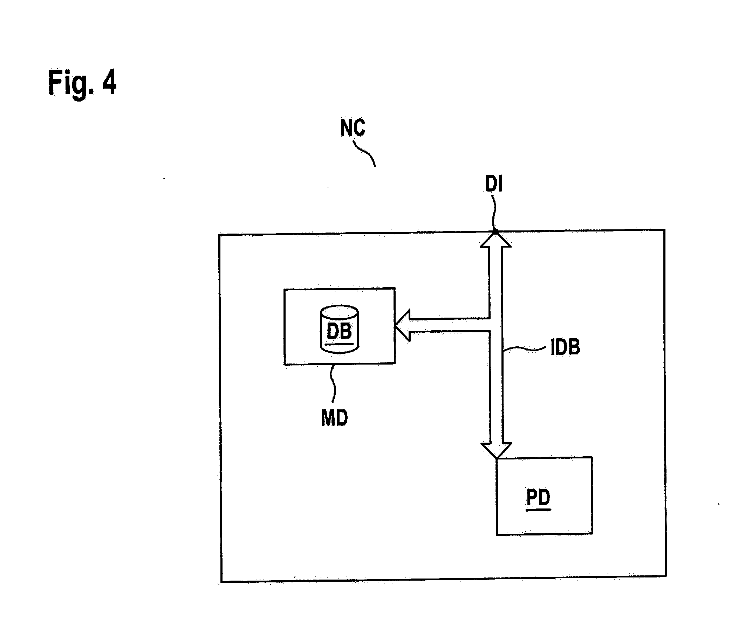

According to the second way of the first embodiment, a network controller NC shown in Figure 4 carries out the different steps proposed for this first embodiment. Preferably, the network controller is a software defined network controller (SDN).

The network controller NC contains a data interface DI, via which the network controller NC communicates with the network nodes of the network.

The controller NC contains furthermore a memory device MD, within which it stores a data base DB, that has knowledge of the network topology of the network as well as an allocation of optical signals to spectral slots with regard to different optical links. The network controller NC contains furthermore a processing device PD. The processing device PD, the memory device MD and the data interface DI are connected via an internal data bus IDB. The network controller NC uses the processing device PD and the memory device MD in conjunction for carrying out the different steps of the first embodiment as now described.

The network controller NC asserts or determines an allocation of the first optical signal to a spectral slot SL3 at an input port IP1 of the node NN, using the data base information DB and the processing device PD. Furthermore, the network controller NC asserts or determines for the first optical signal of the slot SL3 an output port OP2 of the node NN, to which the optical signal shall be switched.

Using the knowledge contained within the data base DB about network topology and allocation of optical signals to spectral slots, the network controller NC determines whether a second optical signal is allocated to the next neighbouring second spectral slot SL4 at the input port IP1. Furthermore, the controller NC determines whether this second optical signal shall be switched from the input port IP1 to the output port OP2. In the case, that it is determined that a second optical signal is allocated to the next neighbouring second spectral slot SL4 at the input port IP1 and that also this second optical signal shall be switched from the input port IP1 to the output port OP2, then the network controller generates control instructions, which contain a switching request. The switching request indicates that the first and the second signal shall be switched from the input port IP1 to the output port OP2 at the node NN by a flex grid WSS device, such as the device D1, within a continuous filter function CFF, which comprises the spectral slices S1, ..., S4 of the spectral slot SL3 and the spectral slices S5, ..., S8 of the spectral slot SL4.

The control instructions generated by the network controller NC are then transmitted via the data interface DI to the concerning network node. The control instructions are preferably sent as an open flow message. The concerning network node receiving the control instructions from the network controller NC then generates control information, using preferably a control unit, directed to a flex grid WSS fo the node. This control information indicates that a filtering function CFF, as shown in Figure 3f, including the slices S1, ..., S8 shall be applied to the spectral slots SL3 and SL4 for switching the optical signals of these slots SL3 and SL4 from the input port IP1 to the output port OP2.

To summarize the above, the network controller NC is operable to

- assert an allocation of a first optical signal to a first spectral slot SL3 at an input port IP1,
- assert for the first optical signal an output port OP2 to which the optical signal shall be switched,
- determine possible allocation status of a second, next neighbouring spectral slot SL4 at the input port IP1,
- and to generate control instruction indicating a switching request for switching at least the first signal from the input port IP1 to the output port OP2 by a flex grid WSS D1 via a continuous filter function comprising at least the spectral slices of the first spectral slot SL3, wherein the continuous filter function comprises one or more spectral slices of the second spectral slot SL4 in dependence on at least the determined allocation status.

In further detail, the controller NC is operable

- to determine whether the second optical signal shall be switched from the input port to the output port OP2,

- and, in case that it is determined that a second optical signal is allocated to the second, next-neighbouring spectral slot SL4 at the input port IP1 and that also this second optical signal shall be switched from the input port to the output port OP2, to generate the control instructions such that the switching request indicates switching the first signal and the second signal from the input port IP1 to the output port OP2 by the WSS via the continuous filter function comprising the spectral slices of the first spectral slot SL3 and the spectral slices of the second spectral slot SL4.

Thus, the controller NC generates the control instructions in dependence on the determined allocation status and in dependence on a determined output port of the second optical signal.

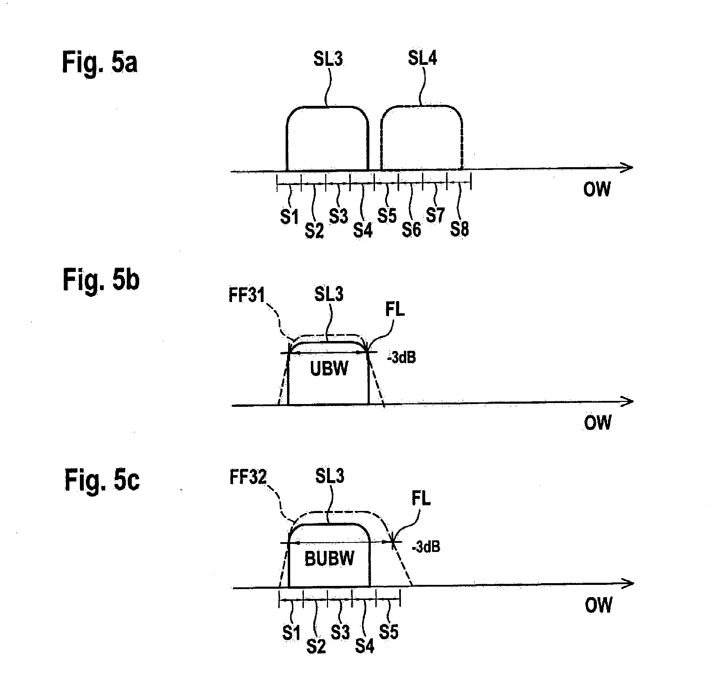

According to a second embodiment, it is proposed to assert or determine an allocation of an optical signal to the spectral slot SL3 of the optical grid OG, shown in Figure 5a, at the input port IP1 of the node NN shown in Figure 2. Furthermore, it is asserted or determined for the optical signal allocated to this spectral slot SL3, to which output port, here the port OP2 of the node NN shown in Figure 2, the optical signal shall be switched within the node NN. Furthermore, it is determined whether another optical signal is allocated to a second, next-neighbouring spectral slot, such as the slot SL4, at the input port IP1. In case it is determined that no second optical signal is allocated to the next-neighbouring spectral slot SL4 at the input port, then control instruction are generated such that a switching request indicates switching the signal allocated to the slot SL3 from the input port IP1 to the output port OP2 by the flex grid WSS D1 via the continuous filter function comprising the the spectral slices of the spectral slot SL3 and one or more spectral slices of the second spectral slot SL4. The advantage achieved by the second embodiment will now be explained in more detail with regard to the Figures 5a, 5b, 5c.

Figure 5a shows a possible allocation of spectral slots. In detail, Figure 5a shows the slot SL3, to which an optical signal is allocated at the port IP1 of Figure 2, and the slot SL5 to which no optical signal is allocated at the input port IP1 of Figure 2.

Figure 5b shows conventional filtering applied by a fixed grid WSS device for switching the optical signal allocated to the slot SL3. According to this conventional filtering, a filtering function FF31 is applied to the slot SL3, wherein a filter level FL, for example at -3dB, determines the usable bandwidth UBW for optical data transmission resulting from such filtering.

Figure 5c illustrates a broadened filter function FF32 proposed for switching the spectral slot SL3 by a flex grid WSS device in the node NN of Figure 2. The broadened filter function containing the slices S1, ..., S5 results in a broadened usable bandwidth BUBW thus leading to a reduced amount of signal impairment.

The proposed method according to the second embodiment may be carried out in two different ways.

According to the first way of carrying out the second embodiment of the proposed network, the control unit CU of the node NN determines a possible allocation status of the next-neighbouring spectral slot SL4 of Figure 5a within the optical grid at the input port IP1 of the node NN of Figure 2.

The control unit CU, the data interface DIF, the memory device MD1 and the internal data bus IDB1 are operable in conjunction to carry out this determination.

In case that it is determined, that no second optical signal is allocated to the second, next-neighbouring spectral slot SL4 at the input port, by detecting a presence of the signal at the spectral slot SL4, the control unit CU generates control instructions with a switching request. This request indicates switching the signal of the slot SL3 from the input port to the output port at the node NN by the flex grid WSS D1 via a continuous filter function as a broadened filter function, such as the filter function FF32 of Figure 5c. The continuous filter function FF32 as a broadened filter function comprises these spectral slices S1, ..., S4 of the spectral slot SL3 and at one spectral slice S5 of the slot SL4, wherein this slice that is directly adjacent to the slot SL3.

Preferably, the filter function FF32 comprises further spectral slices of the spectral slot SL4. Even more preferably, the continuous filter function FF32 contains exactly one adjacent spectral slice S5 of the slot SL4 allowing sufficient broadening of the filter function FF32.

The control instructions generated by the control unit CU is then provided to the flex grid WSS device D1 of the node NN.

Comparing the filter function FF32 according to the prior art as shown in Figure 5b with its usable bandwidth UBW, defined by a filter level FL of for example -3dB, with the broadened usable bandwidth BUBW of the filter function FF32 shown in Figure 5c, defined by a filter level FL of for example -3dB, the advantage of the proposed method becomes clear. Due to the broadened usable bandwidth BUBW of the filter function FF32, the usable bandwidth for transmitting an optical signal within the spectral slot SL3 is extended in comparison to the usable bandwidth UBD of Figure 5b for the filter function FF31, thus achieving reduced amount of signal impairment.

The control unit CU of the node NN in Figure 2 furthermore generates information data in an information message that is sent via the data interface DIF to a network controller. The information data indicates the width of the filter function FF32 used for switching the optical signal allocated to the slot SL3 from the port IP1 to the output port OP2 at the node NN of Figure 2. Preferably, the information data indicates the number and/or indices of the slices S1, ..., S5 that form the filter function FF32 together with an indication of the sideband of the slot SL3 at which the filter function FF32 was broadened. Alternatively the information data indicates the broadened usable bandwidth BUBW together with the lower and the higher frequency of this bandwidth BUBW.

The network controller receiving such information may then derive from this information message and the information data contain therein a number of network nodes that may be passed by the optical signal allocated to the slot SL3 at the port IP1 along its light path from the transmitting to the receiving node.

To summarize the above, the network node NN is operable to

- assert an allocation of a first optical signal to a first spectral slot SL3 at an input port IP1,
- assert for the first optical signal an output port OP2 to which the optical signal shall be switched,
- determine possible allocation status of a second, next neighbouring spectral slot SL4 at the input port IP1,
- and to generate control instruction indicating a switching request for switching at least the first signal from the input port IP1 to the output port OP2 by a flex grid WSS D1 via a continuous filter function comprising at least the spectral slices of the first spectral slot SL3, wherein the continuous filter function comprises one or more spectral slices of the second spectral slot SL4 in dependence on at least the determined allocation status.

In further detail the node NN is operable to, in case it is determined that no second optical signal is allocated to the second, next-neighbouring spectral slot SL4 at the input port IP1,

- generate control instruction such that the switching request indicates switching the signal of the slot SL3 from the input port IP1 to the output port OP2 by the flex grid WSS D1 via the continuous filter function CFF comprising the spectral slices of the spectral slot SL3 and one or more spectral slices of the second spectral slot SL4.

Thus, the node NN generates the control instructions in dependence on the determined allocation status.

According to a second way for carrying out the second embodiment, a network controller as the network controller NC shown in Figure 4 of similar structure is proposed. The controller NC determines the possible allocation status of the second, next-neighbouring spectral slot SL4 of the optical grid at the input port IP1 of the node NN shown in Figure 2. The network controller NC derives this from the topology information as well as the allocation information stored in the data base DB of the memory device MD in conjunction with the processing device PD.

In the case, that the network controller NC determines that no second optical signal is allocated to the second, next-neighbouring spectral slot SL4 at the input port IP1, the network controller NC generates control instruction that contains a switching request. The switching request indicates a request for switching the signal allocated to the spectral slot SL3 of Figure 5a from the input port IP1 to the output port OP2 at the node NN of Figure 2 by the flex grid WSS device D1 within the continuous broadened filter function FF32 of Figure 5c. The filter function FF32 comprises the spectral slices S1, ..., S4 of the spectral slot SL3 and one or more spectral slices of the second spectral slot SL4 as previously described with regard to the first way of carrying out the second embodiment.

The control instructions generated by the network controller NC are transmitted by the network controller NC via the data interface DI towards the concerning network node. The concerning network node receiving such control instruction then generates control information directed one of its flex grid WSS devices. This will cause the flex grid WSS device to perform filtering of the optical signal allocated to the slot SL3 by the continuous filter function FF32 as previously described above and shown in Figure 5c.

To summarize the above, the controller NC is operable to

- assert an allocation of a first optical signal to a first spectral slot SL3 at an input port IP1,
- assert for the first optical signal an output port OP2 to which the optical signal shall be switched,
- determine possible allocation status of a second, next neighbouring spectral slot SL4 at the input port IP1,
- and to generate control instruction indicating a switching request for switching at least the first signal from the input port IP1 to the output port OP2 by a flex grid WSS D1 via a continuous filter function comprising at least the spectral slices of the first spectral slot SL3, wherein the continuous filter function comprises one or more spectral slices of the second spectral slot SL4 in dependence on at least the determined allocation status.

In further detail the controller NC is operable to, in case it is determined that no second optical signal is allocated to the second,

- generate control instruction such that the switching request indicates switching the signal of the slot SL3 from the input port IP1 to the output port OP2 by the flex grid WSS D1 via the continuous filter function CFF comprising the spectral slices of the spectral slot SL3 and one or more spectral slices of the second spectral slot SL4.

Thus, the controller NC generates the control instructions in dependence on the determined allocation status.

Different advantages may be achieved by the first and/or the second embodiment. Due to the reduced amount of signal impairment, a higher available bandwidth may be used for transmitting an optical signal within the slot SL3 and/or SL4. This goes along with lower penalties due to bandwidth limitation. Furthermore, an increased number of optical nodes that may be passed within the network may be achieved. Even furthermore, this may lead to enabling a higher degree of meshing the network.

Due to a reduced amount of signal impairment a higher symbol rate for modulating the optical signal allocated to the slot SL3 may be achieved. Such higher symbol rate may be used for a higher amount of FEC overhead and/or a higher net data rate.

Both embodiments of the method proposed herein have in common, that the optical signal allocated to the spectral slot SL3 as shown in Figure 3a or Figure 5a will be filtered not only by filter functions such as the filter function FF3 of Figure 3c or the filter function FF31 of Figure 5b, wherein these filter functions are symmetrical with regard to the spectral slot SL3 and thus a center frequency that is equal to the center frequency of the spectral slot SL3. Due to filtering by filtering functions such as the filter function CFF of Figure 3d or the filter function FF32 of Figure 5c, a filtering of the optical signal with a filter function that is asymmetrical with regard to the spectral slot SL3 occurs. Thus, the proposed filtering performed by the filter function CFF of Figure 3d or the filter function FF32 of Figure 5c will lead to a change of the centre wavelength of the usable transmission bandwidth for the slot SL3. For the purpose of improved data transmission via the optical signal allocated to the slot SL3, this shift of the centre wavelength of the optical signal may be taken into consideration, preferably at a transmitting and/or receiving side for changing the centre wavelength at the transmitting side in order to achieve a symmetrical spectrum of the transmitted optical signal allocated to the slot SL3. Thus, both concepts proposed within the first and the second embodiment raise a need for determining an offset of the centre frequency cause by either of the methods of the two embodiments. Therefore, both concepts of the first and the second embodiment have in common that an offset of the centre frequency for the optical signal allocated to the slot SL3 has to be determined. Such determination will be explained in detail further below and is proposed herein.

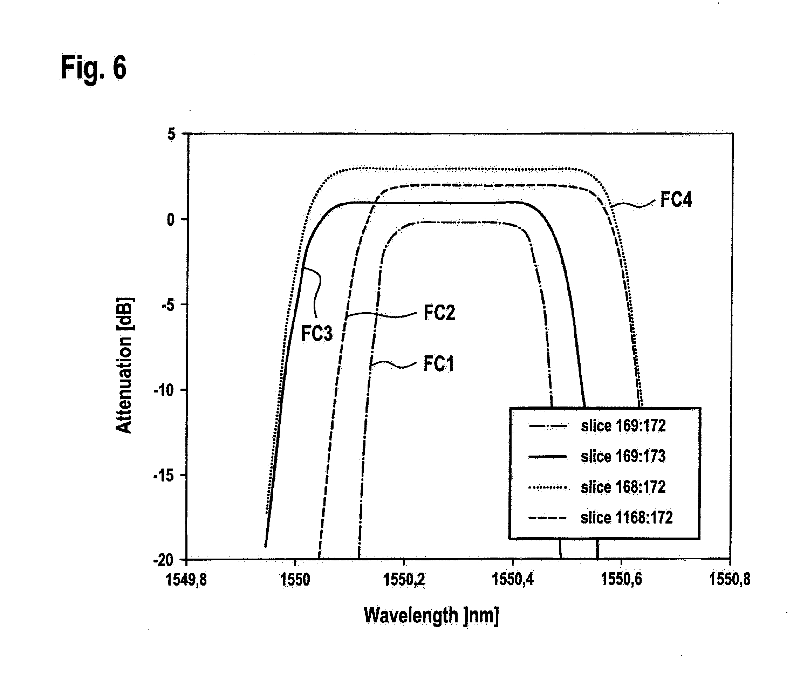

Examples of symmetrical and asymmetrical continuous filter functions are given in Figure 6. The different filtering curves FC1, FC2, FC3, FC4 are shifted in the level by 1 dB for increasing the visibility in this example. The curve FC1 indicates filtering using four spectral slices for a symmetrical filter function with regard to a corresponding initial spectral slot, while the curves FC2 and FC3 indicate filtering using five spectral slices for symmetrical filter functions with regard to the same initial spectral slot. The curve FC4 indicates a symmetrical filtering function with regard to the same initial spectral slot using filtering using six spectral slices. If symmetrical and asymmetrical filter are concatenated as the filters acting within flex grid WSS devices of respective nodes placed along the light path of an optical signal, then the center frequency of the usable transmission bandwidth is shifted while this usable transmission bandwidth is determined mainly by the number of filter edges acting on the outer slices of the initial spectral slot. Thus, having knowledge about the spectral slices determining the outer filter edges of the applied filter functions applied within the nodes along a light-path of an optical signal, one may derive an estimate of the resulting usable transmission bandwidth. This will be described according to first alternative of determining a shift of a center frequency for a spectral slot.

According to this first alternative of determining a shift of the centre frequency, the shift of the centre frequency for the spectral slot is determined by the network controller NC of Figure 4. As previously described above, the controller NC has knowledge about the filtering functions applied at the different nodes. In the first embodiment, the controller has this knowledge since the nodes indicate to the network controller in which way the optical signal was filtered, preferably by indicating the spectral slices forming a filter function. In the second embodiment, the controller has this knowledge, since the controller itself determined the spectral slices forming that form a filter function that is to be applied within a node. From this knowledge, the controller derives the number of filter edges acting on the lower wavelength edge of the initial spectral slot as

$$\sum{}_{LOW}$$

and the number of filter edges acting on the higher wavelength edge of the initial spectral slot as

$$\sum{}_{HIGH}$$

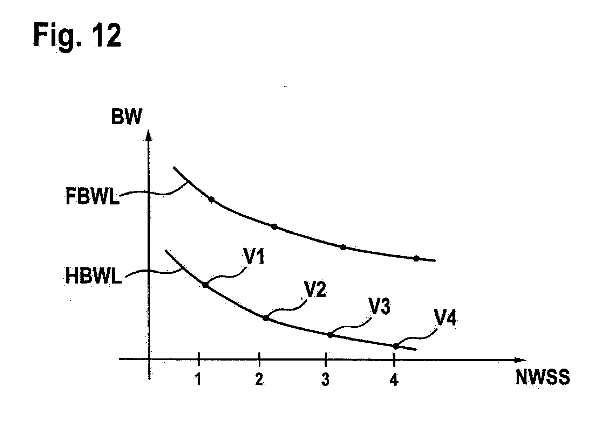

The controller may then obtain knowledge about a resulting bandwidth or a resulting half bandwidth using information provided by a supplier of a flex grid WSS. Figure 12 shows resulting half band width values

$$\frac{BW}{2}$$

on a curve HBWC as values V1, ..., V4 for respective numbers NWSS of flexgrid WSS devices acting with their filters at an edge of a spectral slot. Furthermore, Figure 12 shows possible values for full bandwidths on a curve FBWC.

Using the numbers $\Sigma_{LOW}$ and $\Sigma_{HIGH}$ the controller may derive under knowledge of the values V1, ..., V4 the resulting usable bandwidth RBW as

$$RBW = \frac{BW}{2}\left(\sum_{LOW}\right) + \frac{BW}{2}\left(\sum_{HIGH}\right)$$

and the resulting shift of the center frequency $\Delta f$ as

$$\Delta f = \frac{BW}{2}\left(\sum_{HIGH}\right) - \frac{BW}{2}\left(\sum_{LOW}\right).$$

The controller may contain a look-up table, which contains for different combinations of numbers of filter edges acting on the lower wavelength edge $\Sigma_{LOW}$ and numbers of filter edges acting on the higher wavelength edge $\Sigma_{HIGH}$ entries indicating the corresponding half bandwidths $\frac{BW}{2}\left(\sum_{LOW}\right)$ and $\frac{BW}{2}\left(\sum_{HIGH}\right)$, from which the controller may then derive the resulting shift of the center frequency $\Delta f$ as

$$\Delta f = \frac{BW}{2}\left(\sum_{HIGH}\right) - \frac{BW}{2}\left(\sum_{LOW}\right).$$

Alternatively, the may contain a look-up table, which contains for different combinations of numbers of filter edges acting on the lower wavelength edge $\Sigma_{LOW}$ and numbers of filter edges acting on the higher wavelength edge $\Sigma_{HIGH}$ an entry indicating the resulting shift of the center frequency $\Delta f$ as

$$\Delta f = \frac{BW}{2}\left(\sum_{HIGH}\right) - \frac{BW}{2}\left(\sum_{LOW}\right).$$

The controller NC indicates the determined shift of the centre frequency to the transmitting and/or the receiving node. The controller does so, by generating indication data that indicates the derived modified center frequency and by transmitting via the data interface DI a data message containing said indication data towards the transmitting and/or the receiving node. The transmitting node may then adapt the centre frequency of the optical signal allocated to the respective slot. Furthermore, the receiving node may adapt one or more subdevices, preferably signal processing devices, to such a shifted centre wavelength.

According to second alternative of determining a shift of the centre frequency, the shift of the centre frequency is determined by the node NN of Figure 2, wherein the node NN is an add-drop multiplexing node. The node NN derives from a spectrum of a received signal a modified center frequency for a spectral slot, generates indication data that indicates the derived modified center frequency and transmits a data message containing said indication data towards a network controller and/or the transmitting node. The network controller and/or the transmitting node may then take into consideration this indicated centre frequency. In the case, that the network controller receives the indication data, it may pass the indication data on to the transmitting node.

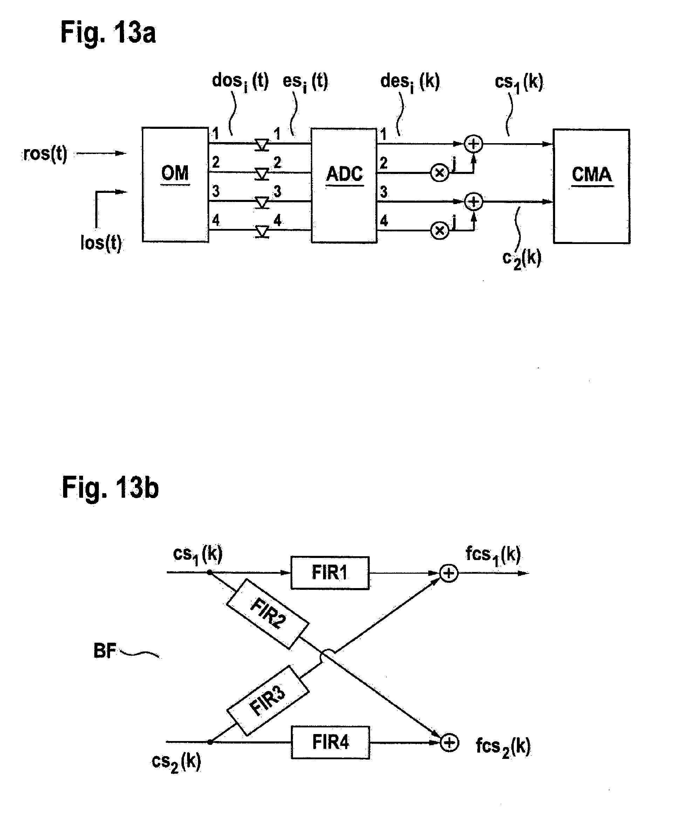

The node contains devices as described now in detail with regard to Figure 13a. A received optical signal $ros(t)$ as a polarization division multiplex (PDM) signal is mixed with a local oscillator signal $los(t)$ in an optical mixer OM, which is a 90° hybrid mixer. The mixer OM obtains four derived optical signals $dos_i(t)$, $i =1,...,4,$. The signal $dos_1(t)$ corresponds to an in-phase component of the optical signal in a first polarization plane, while the signal $dos_3(t)$ corresponds to an in-phase component of the optical signal in a second polarization plane that is orthogonal to the first polarization plane. The signal $dos_2(t)$ corresponds to a quadrature component of the optical signal in the first polarization plane, while the signal $dos_4(t)$ corresponds to a quadrature component of the optical signal in the second polarization plane. The signals $dos_i(t)$, $i =1,...,4$ are then converted via respective photodiodes into respective electrical signals $es_i(t)$, $i =1,...,4$. The electrical signals $es_i(t)$ are then sampled by an analogue digital converter ADC for deriving respective discrete electrical signals $des_i(k)$, $i =1,...,4$, wherein k is the discrete time index. From these discrete electrical signals $des_i(k)$, $i =1,...,4$ two complex signals $cs_1(k)$ and $cs_2(k)$ are derived as $cs_1(k) = des_1 + j\,des_2$ and $cs_2(k) = des_3 + j\,des_4$. Via a Constant Modulus Algorithm CMA filter functions for Finite Impulse Response (FIR) filters are derived for a Butterfly filter BF as shown in Figure 13b. The algorithm may alternatively be a Multi Modulus Algorithm. Via the Butterfly filter BF filtered complex signals $fcs_1(k)$ and $fcs_1(k)$ may be obtained.

A shift of a center frequency for the complex signal $cs_1(k)$ may by derived, by finding the dominant filter out of the filters FIR1 and FIR3 contributing to the filtered signal $fcs_1(k)$. The dominating filter can be found, by determining that one of the filters FIR1 and FIR3, which has in its respective filter function $h_1(k)$, $h_3(k)$ a filter tab with a maximum absolute value via

$$\arg\max_{l=1,3}\left(\max\left(\left|h_l(t)\right|\right)\right)$$

Assuming for example that the filter FIR1 has in its filter function $h_1(k)$ the filter tab with the maximum absolute value, then the shift of the center frequency can be found, by determining a discrete spectrum $H_1(\Omega_s)$, with $s$ as the discrete spectral index, of the dominant filter function FIR1 via

$$H_1(\Omega_s) = fft\big(h_1(k)\big).$$

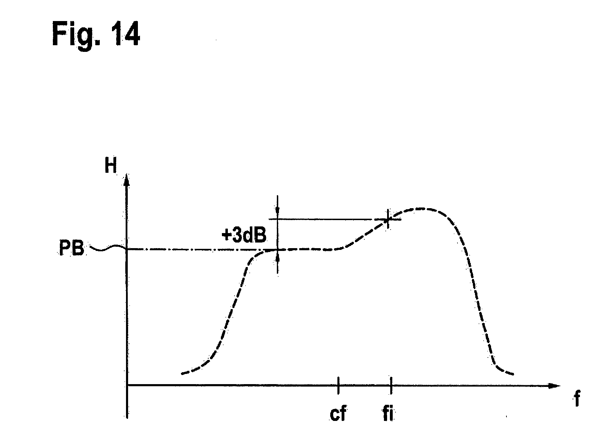

An example H of such a discrete spectrum $H_1(\Omega_s)$ plotted over a frequency f is shown in Figure 14. It is determined that frequency fi, at which the filter function H is greater than the passband value PB by a predetermined value, preferably 3 dB. The shift of the center frequency is the determined as

$$\Delta f = fi - cf .$$

Figure 6 shows different filter characteristics for continuous filter functions. The different filtering curves FC1, FC2, FC3, FC4 are shifted in the level by 1 dB for increasing the visibility. The curve FC1 indicates filtering using four spectral slices, while the curves FC3 and FC4 to 2 indicate filtering using five spectral slices. The curve FC4 indicates filtering function for filtering six spectral slices. In the case of concatenating such filters the different widths as the filters acting within WSS devices of flex grid respective node placed along the light path of an optical signal allocated to a spectral slot the overall available bandwidth is determined mainly by the most in a filter edges. This can be clearly observed.

The filter functions FC2 and FC3 represent filter functions of a five slot width with an extended or broadened bandwidth towards only one side of the spectral slot. A further extension of the filter function by a further filter width has a negligible impact of the overall resulting bandwidth resulting for the configuration of the filters. Thus, the shift of the centre frequency depends on the number of bandwidth extensions on the left and right hand side of the original slot originally containing for example four slices.

Simulation results outlining advantages that may be achieved by the proposed method and/or the proposed devices are now described in detail.

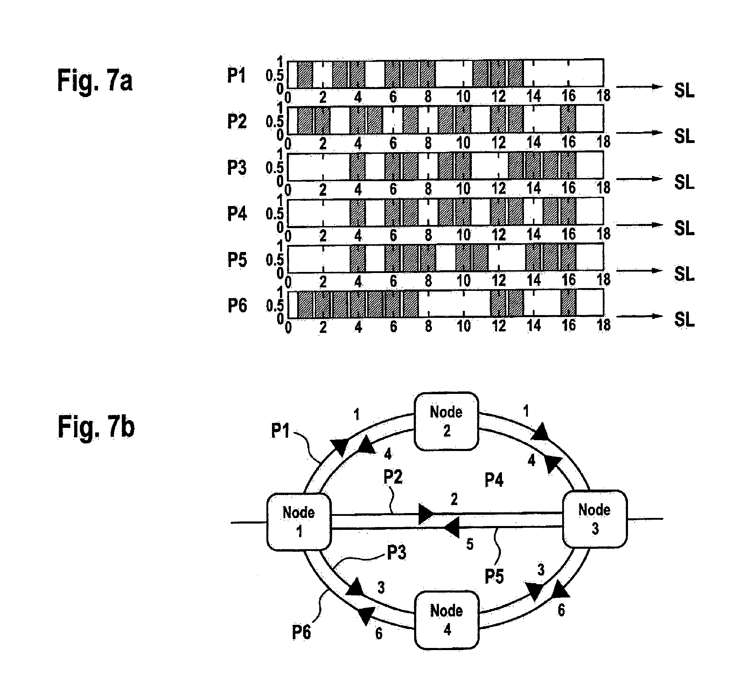

The meshed network used herein for illustration is that of Figure 7b, wherein an allocation of spectral slots SL for different paths P1, ..., P6 was used in the simulation as illustrated in Figure 7b. The traffic in the network was loaded with light-paths from the node 1 to the node 3, from the node 1 via the node 3 back to the node 1 and the light path from the node 1 via the node 3 to the node 1 and to the node 3. The allocation of spectral slots as indicated in Figure 7a was in this example chosen by a random demand generator with 16 demands per node with 16 random link concatenations and destinations. As the working algorithm a random order has been applied. In case of no availability of the required spectral slices the demands have been discarded. Using 50 000 realisations of traffick routing an average transmission length of 2.1 links per light-path and 7.3 channels are routed per link in average. The number of WSS devices passed by the optical signals are in this example 4 to 6 for transmission over 1 to 3 links in the network.

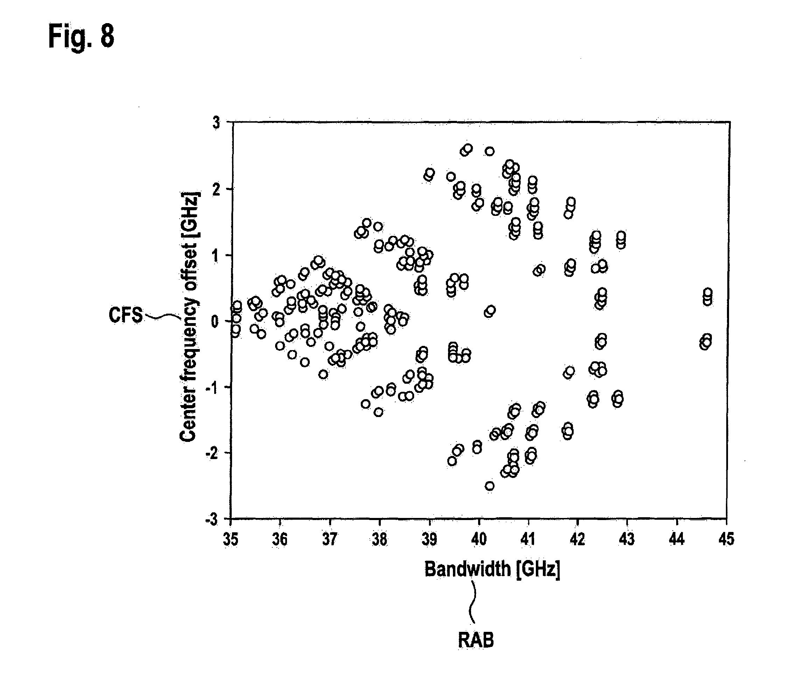

Figure 8 shows possible resulting centre frequency shifts CFS versus the resulting available bandwidth RAB for a concatenation of 6 WSS devices used as an example herein. The maximum bandwidth for passing 6 WSS devices is 44 GHz, while the maximum centre frequency shift of the concatenated filters is +/- 2.8 GHz.

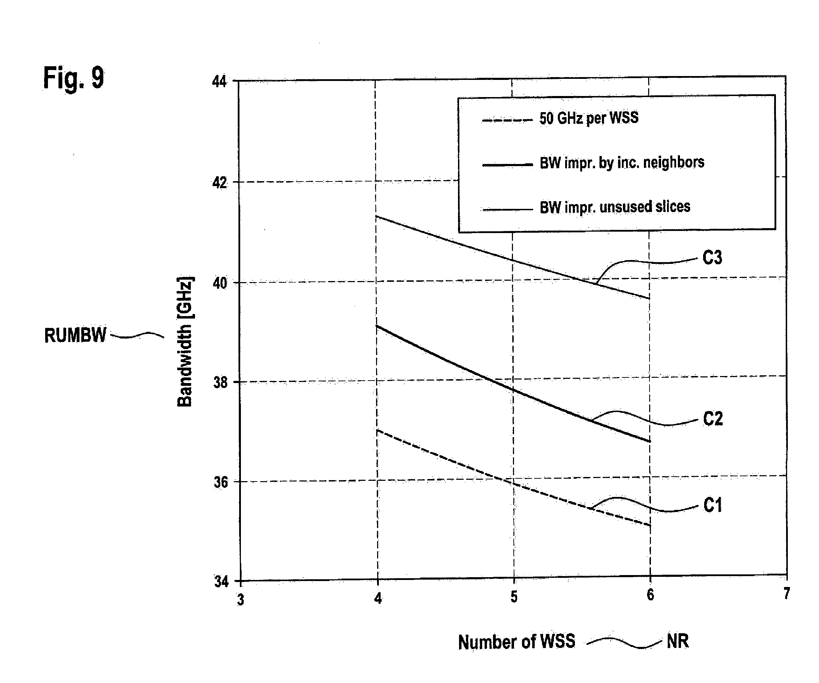

Fig. 9 shows resulting usable mean bandwidths RUMBW vs. the number NR of passed WSS for different approaches. The curve C1 shows results for a fixed grid approach. The curve C2 shows results for the method proposed according to the first embodiment in which a continuous filter function is applied to neighbouring spectral slots whose optical signals are switched from a same input port to a same output port. The curve C3 shows results when combining the method proposed according to the first embodiment and the second embodiment, such that a continuous filter function is applied to neighbouring spectral slots whose optical signals are switched from a same input port to a same output port and such that a filter function for an optical signal of a spectral slot is broadened by incorporating a next neighbouring spectral slice of a neighbouring spectral slot. In the state of the art solution of the fixed grid of the curve C1 the available resulting bandwidth goes down from 37 to 35 GHz for passing 4 to 6 WSS devices. The mean bandwidth for the method according to the first embodiment of curve C2 is 5% higher, whereas the mean bandwidth for the method according to the first and the second embodiment of curve C3 achieves 11 to 13% bandwidth increase.

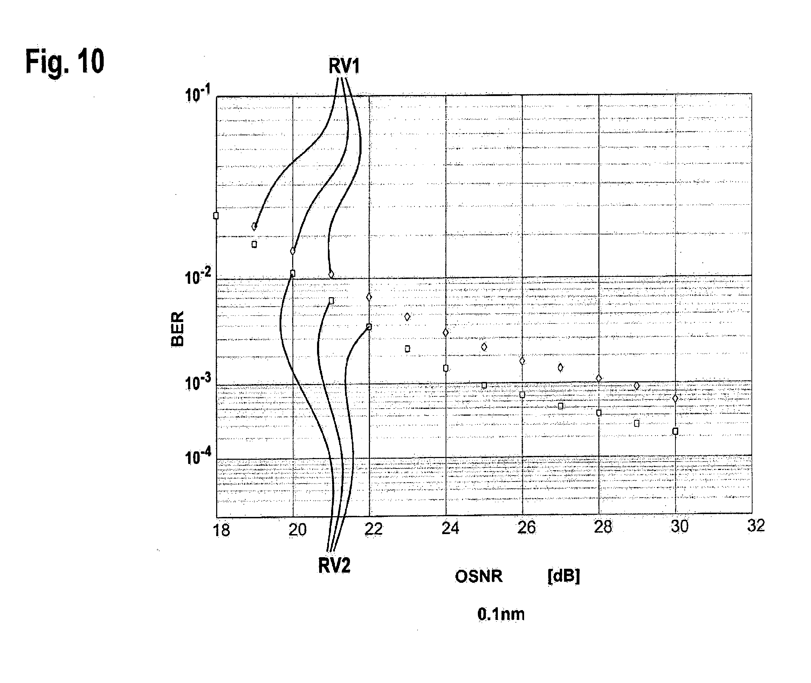

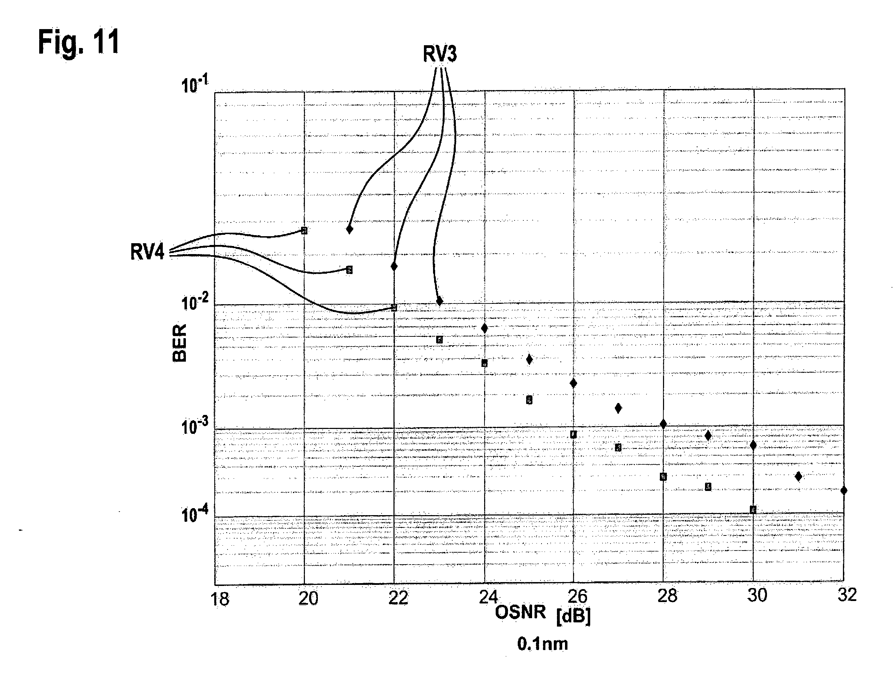

Figures 10 and 11 show results of transmission performance on a light-path with 6 WSS devices applying filtering to the optical signals. Shown are bit error ratios BER over the optical signal to noise ratio OSNR for a measuring bandwidth of 0.1 nm.

Figure 10 shows results for transmission of a 32 GBaud 16QAM signal. Resulting values RV1, illustrated as trapezoids, indicate transmission performance for the fixed grid network approach in which the available bandwidth is 35 GHz. The resulting values RV2, illustrated as squares, indicate transmission performance of the method according to the first and the second embodiment in combination. One can observe an increase of the bit error ration floor up to 10-3. At the FEC threshold of 2*10-2 the OSNR penalty is still <0.5 dB, which is negligible.

Figure 11 shows results when applying a 42.66 Gbaud 16QAM signal to measure the benefit of enhanced channel bandwidth. Resulting values RV3 indicate results for the method according to the first embodiment with a resulting transmission bandwidth of 39 GHz. Resulting values RV4 indicate results for the method according to the first and the second embodiment in combination with a resulting transmission bandwidth of 44 GHz. At the transmission bandwidth of 44 GHz, which is approximately equal to the maximum available bandwidth for the applied optical grid of this example, no significant impact on the transmission performance can be observed, whereas at the transmission bandwidth of 39 GHz penalty of approximately 1dB can be observed.

The functions of the various elements shown in the Figures 2 and 4, including any functional blocks labelled as processor or control unit, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term processor or control unit should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method of switching an optical signal in an optical flex grid network,
   wherein optical signals are allocated to spectral slots (SL1, ..., SLn) of an optical flex grid (OG) with regard to respective optical links,
   wherein optical nodes of said network perform switching of optical signals from incoming links (IL1, ..., IL3) connected to their input ports (IP1, ..., IP3) to outgoing links (OL1, ..., OL3) connected to their output ports (OP1, ..., OP3) using one or more flex grid wavelength selective switches (WSS) that are operable to provide filter functions of slice granularity,
   wherein spectral slots of said optical grid consist of an integer number of spectral slices, comprising

   - asserting an allocation of a first optical signal to a first spectral slot (SL3) of said optical flex grid at an input port (IP1) of an optical node,
   - asserting for said first optical signal an output port (OP2) of said optical node to which said optical signal shall be switched at said optical node,

   comprising furthermore,

   - determining an allocation status of a second, next neighbouring spectral slot (SL4) of said optical flex grid at said input port (IP1) of said optical node,
   - generating control instruction indicating a switching request for switching at least said first signal from said input port (IP1) to said output port (OP2) at said optical node by a flex grid WSS (D1) via a continuous filter function (CFF, FF32) comprising at least the spectral slices of said first spectral slot (SL3), wherein said continuous filter function (CFF, FF32) comprises one or more spectral slices (S5, ..., S8) of said second spectral slot (SL4) in dependence on at least the determined allocation status.

2. Method according to claim 1,
   comprising furthermore,

   - determining whether said second optical signal shall be switched from said input port (IP1) to said output port (OP2) at said optical node,

   wherein , in case it is determined that a second optical signal is allocated to said second, next-neighbouring spectral slot (SL4) at said input port (IP1) and that said optical signal shall be switched from said input port (IP1) to said output port (OP2) at said optical node,

   - said control instructions are generated such that said switching request indicates switching said first signal and said second signal from said input port (IP1) to said output port (OP2) at said optical node by said WSS (D1) via said continuous filter function (CFF) comprising said spectral slices (S1, ..., S4) of said first spectral slot (SL) and said spectral slices (S5, ..., S8) of said second spectral slot (SL4).

3. Method according to claim 1,
   comprising furthermore,
   wherein, in case it is determined that no second optical signal is allocated to said second, next-neighbouring spectral slot (SL4) at said input port (IP1),

   - said control instructions are generated such that said switching request indicates switching said first signal from said input port (IP1) to said output port (OP2) at said optical node by said WSS (D1) via said continuous filter function (FF32) comprising said spectral slices (S1, ..., S4) of said first spectral slot and one or more spectral slices (S5) of said second spectral slot (SL4).

4. Method according to claim 3,
   wherein said switching request indicates switching said first signal from said input port (IP1) to said output port (OP2) at said optical node by said WSS via said continuous filter function (FF32) comprising said spectral slices (S1, ..., S4) of said first spectral slot (SL3) and one single spectral slice (S5) of said second spectral slot (SL4).

5. Method according to claim 4,
wherein said one single spectral slice (S5) of said second spectral slot is a spectral slice directly adjacent to said first spectral slot (SL3).

6. Network Controller for controlling optical network nodes of an optical flex grid network, wherein optical signals are allocated to spectral slots (SL1, ..., SLn) of an optical flex grid (OG) with regard to respective optical links,
wherein optical nodes of said network perform switching of optical signals from incoming links (IL1, ..., IL3) connected to their input ports (IP1, ..., IP3) to outgoing links (OL1, ..., OL3) connected to their output ports (OP1, ..., OP3) using one or more flex grid wavelength selective switches (WSS) that are operable to provide filter functions of slice granularity,
wherein spectral slots of said optical grid consist of an integer number of spectral slices,
wherein said network controller is operable to

- assert an allocation of a first optical signal to a first spectral slot (SL3) of said optical flex grid at an input port (IP1) of an optical node of said network,
- assert for said first optical signal an output port (OP2) of said optical node to which said optical signal shall be switched at said optical node,
- determine a possible allocation status of a second, next neighbouring spectral slot (SL4) of said optical flex grid at said input port (IP1) of said optical node,
- generate control instructions indicating a switching request for switching at least said first signal from said input port (IP1) to said output port (OP2) at said optical node by a flex grid WSS (D1) via a continuous filter function (CFF, FF32) comprising at least the spectral slices of said first spectral slot(SL3), wherein said continuous filter function (CFF, FF32) comprises one or more spectral slices (S5, ..., S8) of said second spectral slot (SL4) in dependence on at least the determined allocation status,
- and to transmit a data message comprising said control instructions towards said optical node.

7. Network controller according to claim 6,
wherein said network controller (NC) is furthermore operable to

- derive a modified center frequency for a spectral slot,
- to generate indication data that indicates the derived modified center frequency and/or a shift of the center frequency,
- and to transmit a data message containing said indication data towards a network node.

8. Optical network node for switching an optical signal in an optical flex grid network,
wherein said optical node is operable to switch optical signals from incoming links connected to its input ports (IP1, ..., IP3) to outgoing links connected to its output ports (OP1, ..., OP3) using one or more flex grid wavelength selective switches (WSS) that are operable to provide filter functions of slice granularity,
wherein spectral slots of an optical flex grid of said optical flex grid network consist of an integer number of spectral slices,
wherein said node is operable to

- assert an allocation of a first optical signal to a first spectral slot (SL3) of said optical flex grid at an input port (IP1) of said node,
- assert for said first optical signal an output port (OP2) of said optical node to which said optical signal shall be switched at said node,
- determine a possible allocation status of a second, next neighbouring spectral slot (SL4) of said optical flex grid at said input port of said node,
- generate control instruction indicating a switching request for switching at least said first signal from said input port (IP1) to said output port (OP2) at said node by a flex grid WSS via a continuous filter function (CFF, FF32) comprising at least the spectral slices of said first spectral slot (SL3), wherein said continuous filter function (CFF, FF32) comprises one or more spectral slices (S5, ..., S8) of said second spectral slot (SL4) in dependence on at least the determined allocation status,
- generate filtering information indicating a bandwidth of said continuous filter function (CFF, FF32) and to transmit a data message containing said filtering information to a network controller of said network.

9. Optical network node according to claim 8,
wherein said node (NN) is an optical add-drop multiplexing node,
furthermore operable to

- derive from a spectrum of a received signal a modified center frequency for a spectral slot,
- to generate indication data that indicates the derived modified center frequency and/or a center frequency shift,

- and to transmit a data message containing said indication data towards a network controller.

10. Optical flex grid network,
wherein optical signals are allocated to spectral slots of an optical flex grid with regard to respective optical links,
wherein optical nodes of said network perform switching of optical signals from incoming links connected to their input ports to outgoing links connected to their output ports using one or more flex grid wavelength selective switches (WSS) that are operable to provide filter functions of slice granularity,
wherein spectral slots of said optical grid consist of an integer number of spectral slices,
the network comprising a network controller according any of the claims 6 or 7.

11. Optical flex grid network,
wherein optical signals are allocated to spectral slots of an optical flex grid with regard to respective optical links,
wherein optical nodes of said network perform switching of optical signals from incoming links connected to their input ports to outgoing links connected to their output ports using one or more flex grid wavelength selective switches (WSS) that are operable to provide filter functions of slice granularity,
wherein spectral slots of said optical grid consist of an integer number of spectral slices,
the network comprising an optical network node according any of the claims 8 or 9.

**Patentansprüche**

1. Verfahren für das Schalten eines optischen Signals in einem optischen Netzwerk mit flexiblem Netz,
wobei optische Signale entsprechend den jeweiligen optischen Links Spektralbändern (SL1, ..., SLn) eines optischen flexiblen Netzes (OG) zugeteilt werden,
wobei optische Knoten besagten Netzwerks das Schalten optischer Signale von eingehenden Links (IL1, ..., IL3), die mit ihren Eingangsports (IP1, ..., IP3) verbunden sind, zu ausgehenden Links (OL1, ..., OL3) durchführen, die mit ihren Ausgangsports (OP1, ..., OP3) verbunden sind, dazu einen oder mehrere wellenlängenselektive Schalter (WSS) für flexible Netze verwendend, die ausgelegt sind für die Bereitstellung von Filterfunktionen für die Slice-Granularität,
wobei die Spektralbänder besagten optischen Netzes aus einer ganzen Zahl von Spektral-Slices bestehen,
umfassend:

- das Aktivieren einer Zuweisung eines ersten optischen Signals an ein erstes Spektralband (SL3) besagten optischen flexiblen Netzes an einem Eingangsport (IP1) eines optischen Knotens,
- das Aktivieren eines Ausgangsports (OP2) besagten optischen Knotens für besagtes optisches Signal, wobei an besagtem optischem Knoten das besagte optische Signal zu diesem Ausgangsport (OP2) besagten optischen Knotens geschaltet wird,

weiterhin umfassend:

- das Bestimmen eines Zuweisungsstatus eines zweiten, direkt danebenliegenden Spektralbands (SL3) besagten optischen flexiblen Netzes an besagtem Eingangsport (IP1) besagten optischen Knotens,
- das Generieren einer Steueranweisung, eine Schaltanfrage zum Umschalten mindestens besagten ersten Signals von besagtem Eingangsport (IP1) zu besagtem Ausgangsport (OP2) an besagtem optischem Knoten durch ein WSS (D1) eines flexiblen Netzes über eine kontinuierliche Filterfunktion (CFF, FF32), indizierend, mindestens die Spektral-Slices besagten ersten Spektralbands (SL3) umfassend, wobei besagte kontinuierliche Filterfunktion (CFF, FF32) in Abhängigkeit von dem mindestens einen bestimmten Zuweisungsstatus eine oder mehrere Spektral-Slices (S5, ..., S8) besagten zweiten Spektralbands (SL4) umfasst.

2. Verfahren nach Anspruch 1,
weiterhin umfassend:

- Bestimmen, ob besagtes zweites optisches Signal an besagtem optischem Knoten von besagtem Eingangsport (IP1) zu besagtem Ausgangsport (OP2) umzuschalten ist,

wobei in dem Fall, dass bestimmt wird, dass ein zweites optisches Signal an besagtem Eingangsport (IP1) besagtem zweitem, direkt danebenliegendem Spektralband (SL4) zugeteilt wird und dass besagtes optisches Signal an besagtem optischem Knoten von besagtem Eingangsport (IP1) zu besagtem Ausgangsport (OP2) umzuschalten ist,

- besagte Steueranweisungen dergestalt generiert werden, dass besagte Schaltanfrage das Umschalten besagten ersten Signals und besagten zweiten Signals von besagtem Eingangsport (IP1) zu besagtem Ausgangsport (OP2) an besagtem optischem Knoten durch besagten WSS (D1) über besagte kontinuierliche Filterfunktion (CFF) anzeigt, besagte Spektral-Slices (S1, ..., S4) besagten ersten Spektralbands (SL) und besagte Spektral-Slices (S5, ..., S8) besagten zweiten Spektralbands (SL4) umfassend.

3. Verfahren nach Anspruch 1, weiterhin umfassend:

dass wobei in dem Fall, dass bestimmt wird, dass besagtem zweitem direkt danebenliegendem Spektralband (SL4) an besagtem Eingangsport (IP1) kein zweites optisches Signal zugeteilt wird,

- besagte Steueranweisungen dergestalt generiert werden, dass besagte Schaltanfrage das Umschalten besagten ersten Signals von besagtem Eingangsport (IP1) zu besagtem Ausgangsport (OP2) an besagtem optischem Knoten durch besagten WSS (D1) über besagte kontinuierliche Filterfunktion (FF32) anzeigt, besagte Spektral-Slices (S1, ..., S4) besagten ersten Spektralbands und eine oder mehrere Spektral-Slices (S5) besagten zweiten Spektralbands (SL4) umfassend.

4. Verfahren nach Anspruch 3, wobei besagte Schaltanfrage das Umschalten besagten ersten Signals von besagtem Eingangsport (IP1) zu besagtem Ausgangsport (OP2) an besagtem optischem Knoten durch besagten WSS über besagte kontinuierliche Filterfunktion (FF32) anzeigt, besagte Spektral-Slices (S1, ..., S4) besagten ersten Spektralbands (SL3) und eine Spektral-Slice (S5) besagten zweiten Spektralbands (SL4) umfassend.

5. Verfahren nach Anspruch 4, wobei besagte einzelne Spektral-Slice (S5) besagten zweiten Spektralbands eine direkt neben besagtem ersten Spektralband (SL3) liegende Spektral-Slice ist.

6. Netzwerksteuereinrichtung für die Steuerung optischer Netzwerkknoten eines optischen Netzwerks mit flexiblem Netz, wobei optische Signale entsprechend den jeweiligen optischen Links Spektralbändern (SL1, ..., SLn) eines optischen flexiblen Netzes (OG) zugeteilt werden, wobei optische Knoten besagten Netzwerks das Schalten optischer Signale von eingehenden Links (IL1, ..., IL3), die mit ihren Eingangsports (Input Ports, IP1, ..., IP3) verbunden sind, zu ausgehenden Links (OL1, ..., OL3) durchführen, die mit ihren Ausgangsports (OP1, ..., OP3) verbunden sind, dazu einen oder mehrere wellenlängenselektive Schalter (WSS) für flexible Netze verwendend, die ausgelegt sind für die Bereitstellung von Filterfunktionen für die Slice-Granularität, wobei die Spektralbänder besagten optischen Netzes aus einer ganzen Zahl von Spektral-Slices bestehen, wobei die besagte Netzwerksteuereinrichtung dafür ausgelegt ist für

- das Aktivieren einer Zuweisung eines ersten optischen Signals an ein erstes Spektralband (SL3) besagten optischen flexiblen Netzes an einem Eingangsport (IP1) eines optischen Knotens besagten Netzwerks,
- das Aktivieren eines Ausgangsports (OP2) besagten optischen Knotens für besagtes optisches Signal, wobei an besagtem optischem Knoten das besagte optische Signal zu diesem Ausgangsport (OP2) besagten optischen Knotens geschaltet wird,
- das Bestimmen eines möglichen Zuweisungsstatus eines zweiten, direkt danebenliegenden Spektralbands (SL4) besagten optischen flexiblen Netzes an besagtem Eingangsport (IP1) besagten optischen Knotens,
- das Generieren von Steueranweisungen, eine Schaltanfrage zum Umschalten mindestens besagten ersten Signals von besagtem Eingangsport (IP1) zu besagtem Ausgangsport (OP2) an besagtem optischem Knoten durch ein WSS (D1) eines flexiblen Netzes über eine kontinuierliche Filterfunktion (CFF, FF32), indizierend, mindestens die Spektral-Slices besagten ersten Spektralbands (SL3) umfassend, wobei besagte kontinuierliche Filterfunktion (CFF, FF32) in Abhängigkeit von dem mindestens einen bestimmten Zuweisungsstatus eine oder mehrere Spektral-Slices (S5, ..., S8) besagten zweiten Spektralbands (SL4) umfasst,
- und das Übermitteln einer Datennachricht mit besagten Steueranweisungen an besagten optischen Knoten.

7. Netzwerksteuereinrichtung nach Anspruch 6, wobei die besagte Netzwerksteuereinrichtung weiterhin ausgelegt ist für

- das Ableiten einer modifizierten Mittelfrequenz für einen Spektralband,
- das Generieren von Hinweisdaten, welche die abgeleitete veränderte Mittelfrequenz und/oder eine Verschiebung der Mittelfrequenz anzeigen,
- und das Übertragen einer Datennachricht mit besagten Hinweisdaten an einen Netzwerkknoten.

8. Optischer Netzwerkknoten für das Schalten eines optischen Signals in einem optischen Netzwerk mit flexiblem Netz,

wobei besagter optischer Knoten ausgelegt ist für das Schalten optischer Signale von eingehenden Links, die mit ihren Eingangsports (IP1, ..., IP3) verbunden sind, zu ausgehenden Links, die mit ihren Ausgangsports (OP1, ..., OP3) verbunden sind, dazu einen oder mehrere wellenlängenselektive Schalter (WSS) für flexible Netze verwendend, die ausgelegt sind für die Bereitstellung von Filterfunktionen für die Slice-Granularität,

wobei die Spektralbänder eines optischen flexiblen Netzes besagten optischen Netzwerks mit flexiblem Netz aus einer ganzen Zahl von Spektral-Slices bestehen,

wobei die besagter Knoten dafür ausgelegt ist für

- das Aktivieren einer Zuweisung eines ersten optischen Signals an ein erstes Spektralband (SL3) besagten optischen flexiblen Netzes an einem Eingangsport (IP1) besagten Knotens,
- das Aktivieren eines Ausgangsports (OP2) besagten optischen Knotens für besagtes optisches Signal, wobei an besagtem optischem Knoten das besagte optische Signal zu diesem Ausgangsport (OP2) besagten Knotens geschaltet wird,
- das Bestimmen eines möglichen Zuweisungsstatus eines zweiten, direkt danebenliegenden Spektralbands (SL4) besagten optischen flexiblen Netzes an besagtem Eingangsport besagten Knotens,
- das Generieren einer Steueranweisung, eine Schaltanfrage zum Umschalten mindestens besagten ersten Signals von besagtem Eingangsport (IP1) zu besagtem Ausgangsport (OP2) an besagtem Knoten durch ein WSS eines flexiblen Netzes über eine kontinuierliche Filterfunktion (CFF, FF32), indizierend, mindestens die Spektral-Slices besagten ersten Spektralbands (SL3) umfassend, wobei besagte kontinuierliche Filterfunktion (CFF, FF32) in Abhängigkeit von dem mindestens einen bestimmten Zuweisungsstatus eine oder mehrere Spektral-Slices (S5, ..., S8) besagten zweiten Spektralbands (SL4) umfasst,
- das Generieren von eine Bandbreite besagter kontinuierlicher Filterfunktion (CFF, FF32) anzeigenden Filterungsinformationen und das Übertragen einer Datennachricht mit besagten Filterungsinformationen an eine Netzwerksteuereinrichtung besagten Netzwerks.

**9.** Optischer Netzwerkknoten nach Anspruch 8, wobei besagter Knoten (NN) ein optischer Add/Drop-Multiplexknoten ist, weiterhin ausgelegt für

- das Ableiten einer modifizierten Mittelfrequenz aus einem Spektrum eines empfangenen Signals für ein Spektralband,
- das Generieren von Hinweisdaten, welche die abgeleitete veränderte Mittelfrequenz und/oder eine Mittelfrequenzverschiebung anzeigen,
- und das Übertragen einer Datennachricht mit besagten Hinweisdaten an eine Netzwerksteuereinrichtung.

**10.** Optisches Netzwerk mit flexiblem Netz, wobei optische Signale entsprechend den jeweiligen optischen Links Spektralbändern eines optischen flexiblen Netzes zugeteilt werden, wobei optische Knoten besagten Netzwerks das Schalten optischer Signale von eingehenden Links, die mit ihren Eingangsports verbunden sind, zu ausgehenden Links durchführen, die mit ihren Ausgangsports verbunden sind, dazu einen oder mehrere wellenlängenselektive Schalter (WSS) für flexible Netze verwendend, die ausgelegt sind für die Bereitstellung von Filterfunktionen für die Slice-Granularität, wobei die Spektralbänder besagten optischen Netzes aus einer ganzen Zahl von Spektral-Slices bestehen, wobei das Netzwerk eine Netzwerksteuereinrichtung nach einem jeglichen der Ansprüche 6 oder 7 umfasst.

**11.** Optisches Netzwerk mit flexiblem Netz, wobei optische Signale entsprechend den jeweiligen optischen Links Spektralbändern eines optischen flexiblen Netzes zugeteilt werden, wobei optische Knoten besagten Netzwerks das Schalten optischer Signale von eingehenden Links, die mit ihren Eingangsports verbunden sind, zu ausgehenden Links durchführen, die mit ihren Ausgangsports verbunden sind, dazu einen oder mehrere wellenlängenselektive Schalter (WSS) für flexible Netze verwendend, die ausgelegt sind für die Bereitstellung von Filterfunktionen für die Slice-Granularität, wobei die Spektralbänder besagten optischen Netzes aus einer ganzen Zahl von Spektral-Slices bestehen, wobei das Netzwerk einen optischen Netzwerkknoten nach einem jeglichen der Ansprüche 8 oder 9 umfasst.

## Revendications

**1.** Procédé de commutation d'un signal optique dans un réseau maillé flexible optique, selon lequel des signaux optiques sont attribués à des créneaux spectraux (SL1, ..., SLn) d'un maillage flexible optique (OG) en considération des liaisons optiques respectives, selon lequel les noeuds optiques dudit réseau effectuent la commutation des signaux optiques des liaisons entrantes (IL1, ..., IL3) connectées à leurs ports d'entrée (IP1, ..., IP3) vers des liaisons sortantes (OL1, ..., OL3) connectées à leurs ports de sortie (OP1, ..., OP3) en utilisant un ou plusieurs commutateurs sélectifs en longueur d'onde (WSS) du maillage flexible qui peuvent être utilisés pour fournir des fonctions de filtrage à granularité de tranche selon lequel les créneaux spectraux dudit maillage optique se composent d'un nombre entier de tranches spectrales,
comprenant

- déclarer une attribution d'un premier signal optique à un premier créneau spectral (SL3) dudit maillage flexible optique à un port d'entrée (IP1) d'un noeud optique,
- déclarer, pour ledit premier signal optique, un port de sortie (OP2) dudit noeud optique auquel ledit signal optique doit être commuté au niveau dudit noeud optique,

comprenant en outre

- déterminer un état d'attribution d'un deuxième créneau spectral (SL4) après le voisin dudit maillage flexible optique audit port d'entrée (IP1) d'un noeud optique,
- générer une instruction de commande indiquant une demande de commutation pour commuter au moins ledit premier signal dudit port d'entrée (IP1) audit port de sortie (OP2) au niveau dudit noeud optique par un WSS de maillage flexible (D1) par le biais d'une fonction de filtrage continu (CFF, FF32) comprenant au moins les tranches spectrales dudit premier créneau spectral (SL3), ladite fonction de filtrage continu (CFF, FF32) comprenant une ou plusieurs tranches spectrales (S5, ..., S8) dudit deuxième créneau spectral (SL4) en fonction d'au moins l'état d'attribution déterminé.

2. Procédé selon la revendication 1,
comprenant en outre

- déterminer si ledit deuxième signal optique doit être commuté dudit port d'entrée (IP1) audit port de sortie (OP2) au niveau dudit noeud optique,

procédé selon lequel, dans le cas où il est déterminé qu'un deuxième signal optique est attribué audit deuxième créneau spectral (SL4) après le voisin au niveau dudit port d'entrée (IP1) et que ledit signal optique doit être commuté dudit port d'entrée (IP1) audit port de sortie (OP2) au niveau dudit noeud optique,

- lesdites instructions de commande sont générées de telle sorte que ladite demande de commutation indique la commutation dudit premier signal et dudit deuxième signal dudit port d'entrée (IP1) audit port de sortie (OP2) au niveau dudit noeud optique par ledit WSS (D1) par le biais de ladite fonction de filtrage continu (CFF) comprenant lesdites tranches spectrales (S1, ..., S4) dudit premier créneau spectral (SL) et lesdites tranches spectrales (S5, .... S8) dudit deuxième créneau spectral (SL4).

3. Procédé selon la revendication 1,
comprenant en outre
selon lequel, dans le cas où il est déterminé qu'aucun deuxième signal optique n'est attribué audit deuxième créneau spectral (SL4) après le voisin au niveau dudit port d'entrée (IP1),

- lesdites instructions de commande sont générées de telle sorte que ladite demande de commutation indique la commutation dudit premier signal dudit port d'entrée (IP1) audit port de sortie (OP2) au niveau dudit noeud optique par ledit WSS (D1) par le biais de ladite fonction de filtrage continu (FF32) comprenant lesdites tranches spectrales (S1, ..., S4) dudit premier créneau spectral et une ou plusieurs tranches spectrales (S5) dudit deuxième créneau spectral (SL4).

4. Procédé selon la revendication 3,
selon lequel ladite demande de commutation indique la commutation dudit premier signal dudit port d'entrée (IP1) audit port de sortie (OP2) au niveau dudit noeud optique par ledit WSS par le biais de ladite fonction de filtrage continu (FF32) comprenant lesdites tranches spectrales (S1, ..., S4) dudit premier créneau spectral (SL3) et une tranche spectrale unique (S5) dudit deuxième créneau spectral (SL4).

5. Procédé selon la revendication 4,
selon lequel ladite tranche spectrale unique (S5) dudit deuxième créneau spectral est une tranche spectrale directement voisine dudit premier créneau spectral (SL3).

6. Contrôleur de réseau pour commander les noeuds de réseau optique dans un réseau maillé flexible optique,
avec lequel des signaux optiques sont attribués à des créneaux spectraux (SL1, ..., SLn) d'un maillage flexible optique (OG) en considération des liaisons optiques respectives, avec lequel les noeuds optiques dudit réseau effectuent la commutation des signaux optiques des liaisons entrantes (IL1, ..., IL3) connectées à leurs ports d'entrée (IP1, ..., IP3) vers des liaisons sortantes (OL1, ..., OL3) connectées à leurs ports de sortie (OP1, ..., OP3) en utilisant un ou plusieurs commutateurs sélectifs en longueur d'onde (WSS) du maillage flexible qui peuvent être utilisés pour fournir des fonctions de filtrage à granularité de tranche,

avec lequel les créneaux spectraux dudit maillage optique se composent d'un nombre entier de tranches spectrales,

avec lequel ledit contrôleur de réseau peut être utilisé pour

- déclarer une attribution d'un premier signal optique à un premier créneau spectral (SL3) dudit maillage flexible optique à un port d'entrée (IP1) d'un noeud optique dudit réseau,
- déclarer, pour ledit premier signal optique, un port de sortie (OP2) dudit noeud optique auquel ledit signal optique doit être commuté au niveau dudit noeud optique,
- déterminer un état d'attribution possible d'un deuxième créneau spectral (SL4) après le voisin dudit maillage flexible optique audit port d'entrée (IP1) dudit noeud optique,
- générer des instructions de commande indiquant une demande de commutation pour commuter au moins ledit premier signal dudit port d'entrée (IP1) audit port de sortie (OP2) au niveau dudit noeud optique par un WSS de maillage flexible (D1) par le biais d'une fonction de filtrage continu (CFF, FF32) comprenant au moins les tranches spectrales dudit premier créneau spectral (SL3), ladite fonction de filtrage continu (CFF, FF32) comprenant une ou plusieurs tranches spectrales (S5, ..., S8) dudit deuxième créneau spectral (SL4) en fonction d'au moins l'état d'attribution déterminé,
- et émettre un message de données comprenant lesdites instructions de commande vers ledit noeud optique.

7. Contrôleur de réseau selon la revendication 6, avec lequel ledit contrôleur de réseau (NC) peut en outre être utilisé pour

- dériver une fréquence centrale modifiée pour un créneau spectral,
- générer des données d'indication qui indiquent la fréquence centrale modifiée dérivée et/ou un décalage de la fréquence centrale,
- et émettre un message de données contenant lesdites données d'indication vers un noeud optique.

8. Noeud de réseau optique pour commuter un signal optique dans un réseau maillé flexible optique, avec lequel le noeud optique peut être utilisé pour commuter des signaux optiques en provenance des liaisons entrantes connectées à ses ports d'entrée (IP1, ..., IP3) vers des liaisons sortantes (OL1, ...,

OL3) connectées à ses ports de sortie (OP1, ..., OP3) en utilisant un ou plusieurs commutateurs sélectifs en longueur d'onde (WSS) du maillage flexible qui peuvent être utilisés pour fournir des fonctions de filtrage à granularité de tranche,

avec lequel les créneaux spectraux d'un maillage optique dudit réseau maillé flexible optique se composent d'un nombre entier de tranches spectrales,

avec lequel ledit noeud peut être utilisé pour

- déclarer une attribution d'un premier signal optique à un premier créneau spectral (SL3) dudit maillage flexible optique à un port d'entrée (IP1) dudit noeud,
- déclarer, pour ledit premier signal optique, un port de sortie (OP2) dudit noeud optique auquel ledit signal optique doit être commuté au niveau dudit noeud,
- déterminer un état d'attribution possible d'un deuxième créneau spectral (SL4) après le voisin dudit maillage flexible optique audit port d'entrée dudit noeud,
- générer des instructions de commande indiquant une demande de commutation pour commuter au moins ledit premier signal dudit port d'entrée (IP1) audit port de sortie (OP2) au niveau dudit noeud par un WSS de maillage flexible par le biais d'une fonction de filtrage continu (CFF, FF32) comprenant au moins les tranches spectrales dudit premier créneau spectral (SL3), ladite fonction de filtrage continu (CFF, FF32) comprenant une ou plusieurs tranches spectrales (S5, ..., S8) dudit deuxième créneau spectral (SL4) en fonction d'au moins l'état d'attribution déterminé,
- générer des informations de filtrage indiquant une largeur de bande de ladite fonction de filtrage continu (CFF, FF32) et émettre un message de données contenant lesdites informations de filtrage à un contrôleur de réseau dudit réseau.

9. Noeud de réseau optique selon la revendication 8, avec lequel ledit noeud (NN) est un noeud de multiplexage d'insertion/extraction optique, pouvant en outre être utilisé pour

- dériver d'un spectre d'un signal reçu une fréquence centrale modifiée pour un créneau spectral,
- générer des données d'indication qui indiquent la fréquence centrale modifiée dérivée et/ou un décalage de la fréquence centrale,
- et émettre un message de données contenant lesdites données d'indication vers un contrôleur de réseau.

10. Réseau maillé flexible optique, avec lequel des signaux optiques sont attribués aux créneaux spectraux d'un maillage flexible optique en considération des liaisons optiques respectives,

avec lequel les noeuds optiques dudit réseau effectuent la commutation des signaux optiques en provenance des liaisons entrantes connectées à leurs ports d'entrée vers des liaisons sortantes connectées à leurs ports de sortie en utilisant un ou plusieurs commutateurs sélectifs en longueur d'onde (WSS) du maillage flexible qui peuvent être utilisés pour fournir des fonctions de filtrage à granularité de tranche,

avec lequel les créneaux spectraux dudit maillage optique se composent d'un nombre entier de tranches spectrales,

le réseau comprenant un contrôleur de réseau selon l'une quelconque des revendications 6 ou 7.

11. Réseau maillé flexible optique,

avec lequel des signaux optiques sont attribués aux créneaux spectraux d'un maillage flexible optique en considération des liaisons optiques respectives,

avec lequel les noeuds optiques dudit réseau effectuent la commutation des signaux optiques en provenance des liaisons entrantes connectées à leurs ports d'entrée vers des liaisons sortantes connectées à leurs ports de sortie en utilisant un ou plusieurs commutateurs sélectifs en longueur d'onde (WSS) du maillage flexible qui peuvent être utilisés pour fournir des fonctions de filtrage à granularité de tranche,

avec lequel les créneaux spectraux dudit maillage optique se composent d'un nombre entier de tranches spectrales,

le réseau comprenant un noeud de réseau optique selon l'une quelconque des revendications 8 ou 9.

Fig. 1

EP 2 863 646 B1

**Fig. 2**

EP 2 863 646 B1

## Fig. 3a

SL1  SL2  SL3  SL4  SL5

1   2   3   4   5   ...   n-2   n-1   n

SLn

OG

OW

50GHz

## Fig. 3b

FF3   FF4

SL3   SL4

FN

OW

EP 2 863 646 B1

**Fig. 3c**

FF3    FL
       -3dB

UBW

OW

**Fig. 3d**

FFX    FL
       -3dB

UBW

OW

**Fig. 3e**

RFF    RFL
       -3dB

RUBW

OW

**Fig. 3f**

IR

SL3    SL4

CFF

UBW

OW

S1 S2 S3 S4 S5 S6 S7 S8

Fig. 4

Fig. 5a

Fig. 5b

Fig. 5c

**Fig. 6**

EP 2 863 646 B1

Fig. 7a

Fig. 7b

EP 2 863 646 B1

Fig. 8

Fig. 9

RUMBW

Bandwidth [GHz]

Legend:
- – – – – 50 GHz per WSS
- —— BW impr. by inc. neighbors
- —— BW impr. unsused slices

C3

C2

C1

Number of WSS  NR

EP 2 863 646 B1

**Fig. 10**

Fig. 11

EP 2 863 646 B1

# Fig. 12

EP 2 863 646 B1

# Fig. 13a

$dos_i(t)$   $es_i(t)$   $des_i(k)$   $cs_1(k)$

ros(t) →

los(t)

OM

ADC

CMA

$c_2(k)$

# Fig. 13b

$cs_1(k)$   FIR1   $fcs_1(k)$

FIR2

BF

FIR3

$cs_2(k)$   FIR4   $fcs_2(k)$

33

EP 2 863 646 B1

# Fig. 14

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20100328291 A1